# EUROPEAN PATENT SPECIFICATION

(11) **EP 2 681 125 B1**
(45) Date of publication and mention of the grant of the patent: **12.04.2017**
(21) Application number: 12707952.3
(22) Date of filing: 28.02.2012
(51) Int. Cl.: B65D 41/32, B65D 43/02, B65D 51/16

(54) **METHOD OF MANUFACTURING A SCREW CAP, AND A SCREW CAP FOR CLOSING A PRESERVING JAR**
VERFAHREN ZUR HERSTELLUNG EINER SCHRAUBKAPPE UND SCHRAUBKAPPE ZUM VERSCHLIESSEN EINES KONSERVIERUNGSGEFÄSSES
PROCÉDÉ DE FABRICATION D'UN BOUCHON À VIS ET BOUCHON À VIS SERVANT À FERMER UN BOCAL DE CONSERVATION

(30) Priority: 01.03.2011 NL 2006323
(43) Date of publication of application: 08.01.2014
(73) Proprietor: E + E Holding BV, 4012 BG Kerk Avezaath (NL)
(72) Inventor: VELTMAN, Peter Jan Marie, NL-4012 BG Kerk Avezaath (NL)
(74) Representative: De Vries & Metman
(86) International application number: PCT/NL2012/050119
(87) International publication number: WO 2012/118374

(56) References cited:
- DE-A1- 10 200 321
- DE-U1-202006 016 589
- GB-A- 1 516 386
- GB-A- 2 429 009
- NL-A- 7 310 676
- US-A- 3 410 436
- US-A- 4 132 328

## Description

The present invention is related to a method of manufacturing a screw cap for closing a preserving jar, wherein a weakening line is provided in the cap which can be broken by means of finger force.

Such a method is known in the prior art. In the known method a weakening line is provided in the cap in order to press the cap open at the weakening line by means of finger force. As a consequence, the content of the closed preserving jar will communicate with the ambient air and the pressure in the preserving jar will be equalized with ambient pressure. It is generally known, that unscrewing of a preserving jar is simplified, because under pressure in the preserving jar pulls the cap against the jar firmly. A disadvantage of the known method is that it is not suitable to manufacture a large number of caps for preserving jars within a limited time period accurately. The accuracy is relevant, since it is not acceptable that at the weakening line leakage to the inner side of the preserving jar arises automatically, neither after a certain period of time after manufacturing a cap that is screwed on a filled jar.

US 3,410,436 discloses a method according to the preamble of claim 1 and is related to a closure cap with a vent means in its cover which can be opened by finger pressure of a user to permit a controlled release of the pressure within the container and which will automatically close and reseal the package upon release of the venting pressure. The vent comprises a scoreline, perforation or similar weakened portion in the resilient cover material of the cap and a gasket positioned on the underside of the cover beneath the weakened portion.

GB 1 516 386 is related to a plastics snap-on cover having a top portion and a skirt portion which in use snaps over a circumferential bead on a tin. It is provided with a protuberance or extension concentrically on the top portion, and with a supporting device radially spaced from the protuberance. The cover is provided initially as an over-cap on a container for materials packed at reduced pressure and then subjected to excess pressure, e.g. powdered coffee. Such containers have a tear-off lid defined by a score line, and a pre-weakened region to form a ventilating opening, which region is aligned with the protuberance. In use the supporting device retains the top portion of the cover spaced from the lid of the container until pressure is exerted above the protuberance to cause the protuberance to engage and open the region.

NL 7 310 676 is related to a container wall which has an elongate dent, and a weakening line which extends across the dent, so as to be rupturable to form an opening in the wall when the dent is stressed. Rupturing the cap at the intersection of the dent and weakening line releases the vacuum and facilitates removal of the cap.

GB 2 429 009 is related to a container for storing effervescent liquids comprising a gas permeable, liquid impermeable membrane. The membrane does not cover the means by which liquid is to be removed from the container, and is arranged so that it can be exposed to the atmosphere before the means of dispensing the liquid from the container is opened.

US 4 132 328 is related to a wall portion of a container which has a removable section defined by a weakened score line. A tab is secured to the removable section and the tab and removable section are designed so that both remain captive with respect to the end panel when the weakened score line is severed. The weakened score line is produced by a three step process and has an area of reduced residual which is first severed when a force is applied to the tab so that the container is vented before the remainder of the residual is severed. The tab is designed to produce a localized initial pressure to initially sever the area of reduced residual and then sever the remainder of the score line.

An object of the invention is to provide an efficient method of manufacturing a screw cap which satisfies the requirements of food safety.

This object is achieved by the method according to claim 1, wherein at the location where the weakening line is intended material is removed from the cap so as to obtain a slot. In practice the slot is applied at the outer side of the cap. The outer side is the side which is located opposite to the screwing means, hence the side which is located at the outer side when the screw cap is screwed onto the preserving jar.

An advantage of the method according to the invention is that removing the material at the weakening line minimizes local plastic deformation of material. As a consequence, local damage of the cap near the created slot is minimized. Typical techniques which can be used to apply a weakening line, but which can deform the material locally seriously, are punching, stamping, pressing, cutting, scoring, notching, etc. By removing the material from the cap according to the invention the material structure close to the slot can be maintained better.

In practice the material of the cap is formed from a metal. Normally the metal is coated by means of a protective layer so as to avoid contact with ambient air and the content of the preserving jar.

Preferably the force that is exerted onto the cap for removing the material from the cap substantially extends within the plane of the cap. In other words, forces in the direction perpendicularly to the plane of the cap are minimal during the treatment. As a consequence, a relatively deep slot can be made in the cap, whereas the risk of preliminary leakage at the weakening line does not become too large. In comparison to for example impressing a sharp subject for creating a weakening line, the risk of piercing too far is much smaller. Such tools, such as for example a knife for pressing, is also sensitive to wear, which requires a relatively broad safety margin.

Removing the material may comprise a non-mechanical treatment, such that forces which are exerted onto the material next to the slot are minimal. In a practical embodiment the non-mechanical treatment comprises a treatment by means of a laser beam. This provides the opportunity to burn away material very locally. By means of a laser beam a very accurate and narrow slot can be obtained. Compared to for example an indentation by means of a sharp knife, the slot that is applied by means of a laser beam can have much steeper side walls, which has a positive influence on the breaking characteristics at the weakening line. Using a laser beam appears to make it possible to provide more than one hundred caps per minute with slots in a cross shape, whereas a great accuracy of the dimensions is obtained.

After manufacturing the slot, it is coated by applying a coating. As a consequence, contact with ambient air is avoided hence minimizing the risk of corrosion.

The slot maybe applied before the cap has obtained its final shape, for example when the cap still must be cut out of a flat plate or when the cap has already been cut out, but still has to be deformed to a cap including screw means.

The invention is also related to a method of assembling a preserving jar, wherein a screw cap is manufactured according to the method as described hereinbefore, before the screw cap is screwed onto a preserving jar including content. This provides the opportunity to check the cap before it is screwed onto a preserving jar that was filled before. It is also possible to screw, the cap onto the preserving jar firstly and then providing the slot. However, this may make monitoring of leakage or almost leakage more difficult.

As described hereinbefore, the slot may be provided at the outer side of the screw cap. The way in which the slot has been manufactured, can be observed because of the minimal deformation of material close to the slot. In practice a slot which has been manufactured by local deformation, for example by means of pressing, the portion of the bottom below the slot will have a tapered shape. In case of removing material this is not necessary. The side walls of the slot can form a substantially right angle with respect to the plane of the cap, or the angle can be smaller than 20 degrees or 10 degrees, for example. The side walls of the slot may also extend substantially parallel to each other.

In a practical embodiment the width of the slot is smaller than 0.2 mm and lies for example within the range of 50 to 100 micrometer. As seen in cross-section the slot may have a substantially square shape, for example having a width/depth ratio of 0.5-1.5, but alternative ratios are conceivable.

Furthermore, a second slot is present, which intersects the first slot. The slots may have a cross shape, but alternative shapes are conceivable.

In a specific embodiment the thickness of the portion of the bottom below the slot is smaller than 50% of the thickness of the bottom portion adjacent to the slot, and preferably smaller than 30% or even 20%.

The invention will be elucidated further by means of drawings, which show embodiments of the invention very schematically.
Fig. 1 is a plan view of an embodiment of the screw cap according to the invention.
Fig. 2 is a cross-sectional view of the screw cap according to the line II-II in Fig. 1.
Fig. 3 is a similar view as Fig. 2 according to the line III-III in Fig. 1.
Fig. 4 is a number of plan views of portions of alternative embodiments of the screw cap according to Fig. 1.

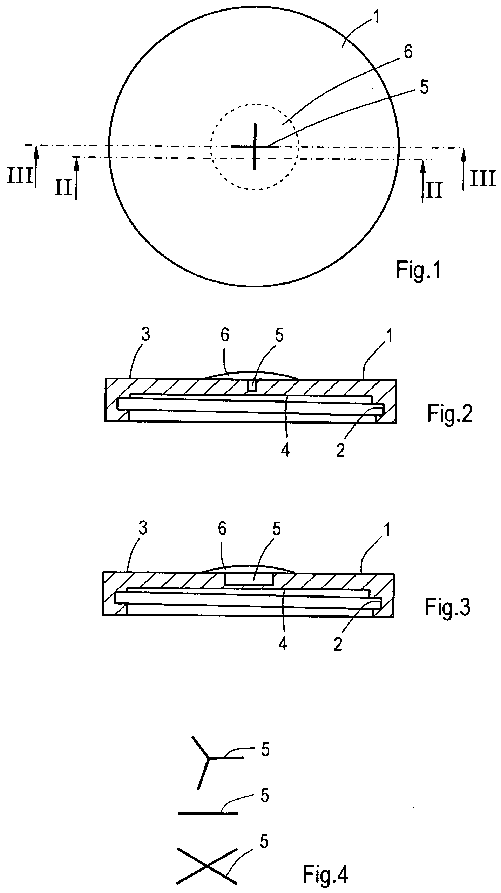

Fig. 1 shows a plan view of an embodiment of a screw cap 1 according to the invention. The screw cap 1 is suitable for closing a preserving jar (not shown). In practice a preserving jar is often a pot of glass, but alternative materials are conceivable, as well.

The screw cap 1 is made of a metal plate and comprises a screw thread 2 are bayonet closing which fits on a screw closing of a preserving jar. A conventional screw cap, and also the embodiment as shown in Fig. 1, is provided with a coating (not shown) at its outer side 3 and its inner side 4 in order to avoid that the ambient air or the content of the preserving jar contacts the metal so as to prevent corrosion thereof.

At its outer side 3 the screw cap 1 is provided with two slots 5 in a cross shape. At the slots 5 the material of the gap 1 has been removed. The depth of the slots 5 has been selected such that the thickness of the bottom portion below the slots 5 is smaller than 50% of the thickness of the bottom portion adjacent to the slots 5, but this can be dependent on the choice of the material of the cap 1. The slots 5 serve as weakening lines in the cap 1 which can be broken by means of finger force. The thickness of the remainder of the bottom portion below the slots 5 can be such that the cap 1 can be opened by adults only.

When the closed preserving jar has to be opened, at first the user can apply a force onto the slots 5 in the direction perpendicularly to the plane of the cap 1. As soon as the bottom portion below the slots 5 obtains a minimal crack are opening, the vacuum below the screw cap 1 will disappear and the screw cap 1 can be screwed open easily from the preserving jar.

The slots 5 are provided before deforming the metal plate to the shape of the screw cap 1 and before applying a coating to the outer side 4 of the screw cap 1.

In order to create an accurate extent of the bottom below the slots 5, according to the invention material is removed from the cap 1 and the cap is not locally deformed as is the case by punching or scoring, for example. In this case the slots 5 are provided by means of a laser beam. This can be performed at high speed and accurately. The slots 5 can be very narrow and the side walls thereof may extend substantially parallel with respect to each other.

After applying the slots 5 these are covered by applying a coating 6. This prevents the walls of the slots 5 against corrosion, such that at a later stage possible preliminary leakage to the content of the preserving jar could arise.

Fig. 4 shows some alternative shapes of slots 5, as seen at the outer side 3 of the screw cap 1, but numerous alternative shapes are conceivable, such as curved lines, etc.

The invention is not limited to the embodiments as shown in the drawings and described hereinbefore, which can be varied in different ways within the scope of the invention defined by the appended claims. For example, it is possible to locate the weakening line or weakening lines out of the centre of the cap.

## Claims

1. Method of manufacturing a screw cap (1) for closing a preserving jar, wherein in the cap a weakening line is provided which can be broken by means of finger force, **characterized in that** the weakening line is provided by removing material from the cap (1) at the intended location of the weakening line so as to obtain a slot (5), wherein a second slot is provided which intersects the first slot, wherein the screw cap (1) is made of a metal plate and the slots (5) are provided before deforming the metal plate to the shape of the screw cap (1) and before applying a coating to the outer side (4) of the screw cap (1).

2. Method according to claim 1, wherein the force that is exerted onto the cap (1) for removing the material from the cap (1) is directed substantially only within the plane of the cap (1).

3. Method according to claim 1 or 2, wherein the step of removing the material comprises a non-mechanical treatment.

4. Method according to claim 1, wherein the non-mechanical treatment comprises a treatment by means of a laser beam.

5. Method according to one of the preceding claims, wherein the slot (5) is covered by means of applying a coating (6).

6. Method according to one of the preceding claims, wherein the slot (5) is applied before the cap (1) has obtained its final shape.

7. Method of assembling a preserving jar, wherein a screw cap is manufactured by means of the method according to one of the preceding claims, before the screw cap (1) is screwed onto a preserving jar including content.

## Patentansprüche

1. Verfahren zur Herstellung einer Schraubkappe (1) zum Schließen eines Einmachglases, wobei in der Kappe eine Schwächungslinie bereitgestellt ist, die mit Hilfe der Kraft eines Fingers gebrochen werden kann, **dadurch gekennzeichnet, dass** die Schwächungslinie bereitgestellt wird, indem an der beabsichtigten Stelle der Schwächungslinie Material von der Kappe (1) entfernt wird, um einen Schlitz (5) zu erhalten, wobei ein zweiter Schlitz bereitgestellt wird, der den ersten Schlitz schneidet, wobei die Schraubkappe (1) aus einer Metallplatte hergestellt ist und die Schlitze (5) vor dem Verformen der Metallplatte in die Form der Schraubkappe (1) und vor dem Aufbringen einer Beschichtung auf der Außenseite (4) der Schraubkappe (1) bereitgestellt werden.

2. Verfahren nach Anspruch 1, wobei die Kraft, die auf die Kappe (1) ausgeübt wird, um das Material von der Kappe (1) zu entfernen, im Wesentlichen nur innerhalb der Ebene der Kappe (1) gerichtet ist.

3. Verfahren nach Anspruch 1 oder 2, wobei der Schritt der Entfernung des Materials eine nicht mechanische Behandlung aufweist.

4. Verfahren nach Anspruch 1, wobei die nicht mechanische Behandlung eine Behandlung mittels eines Laserstrahls aufweist.

5. Verfahren nach einem der vorhergehenden Ansprüche, wobei der Schlitz (5) mittels des Aufbringens einer Beschichtung (6) bedeckt wird.

6. Verfahren nach einem der vorhergehenden Ansprüche, wobei der Schlitz (5) aufgebracht wird, bevor die Kappe (1) ihre abschließende Form erhalten hat.

7. Verfahren zum Zusammenfügen eines Einmachglases, wobei eine Schraubkappe mittels des Verfahrens nach einem der vorhergehenden Ansprüche hergestellt wird, bevor die Schraubkappe (1) auf ein Einmachglas mit Inhalt geschraubt wird.

## Revendications

1. Procédé de fabrication d'un bouchon à vis (1) servant à fermer un bocal de conservation, dans lequel une ligne de faiblesse est prévue dans le bouchon qui peut être rompue à la force des doigts, **caractérisé en ce que** la ligne de faiblesse est fournie par retrait de matériau du bouchon (1) à l'endroit voulu de la ligne de faiblesse de façon à obtenir une fente (5), dans lequel une deuxième fente est prévue qui coupe la première fente, dans lequel le bouchon à vis (1) est formé d'une plaque métallique et les fentes (5) sont fournies avant déformation de la plaque métallique pour obtenir la forme du bouchon à vis (1) et avant application d'un revêtement sur le côté extérieur (4) du bouchon à vis (1).

2. Procédé selon la revendication 1, dans lequel la force qui est exercée sur le bouchon (1) pour retirer le matériau du bouchon (1) est dirigée sensiblement seulement à l'intérieur du plan du bouchon (1).

3. Procédé selon la revendication 1 ou 2, dans lequel l'étape de retrait du matériau comprend un traitement non mécanique.

4. Procédé selon la revendication 1, dans lequel le traitement non mécanique comprend un traitement au moyen d'un faisceau laser.

5. Procédé selon l'une quelconque des revendications précédentes, dans lequel la fente (5) est couverte par application d'un revêtement (6).

6. Procédé selon l'une quelconque des revendications précédentes, dans lequel la fente (5) est appliquée avant que le bouchon (1) n'ait obtenu sa forme finale.

7. Procédé d'assemblage d'un bocal de conservation, dans lequel un bouchon à vis est fabriqué au moyen du procédé selon l'une quelconque des revendications précédentes, avant que le bouchon à vis (1) soit vissé sur un bocal de conservation comprenant un contenu.
